# EUROPÄISCHE PATENTSCHRIFT

(11) **EP 4 490 417 B1**
(45) Veröffentlichungstag und Bekanntmachung des Hinweises auf die Patenterteilung: **08.04.2026**
(21) Anmeldenummer: 23705394.7
(22) Anmeldetag: 15.02.2023
(51) Int. Cl.: F16H 57/021, F16H 57/029, F16H 57/04

(54) **GETRIEBE MIT GEHÄUSETEIL UND LAGER ZUR DREHBAREN LAGERUNG EINER WELLE**
TRANSMISSION WITH HOUSING PART AND BEARING FOR ROTATABLE MOUNTING OF A SHAFT
TRANSMISSION COMPORTANT UNE PARTIE CARTER ET UN PALIER POUR LE MONTAGE ROTATIF D'UN ARBRE

(30) Priorität: 07.03.2022 DE 102022000790
(43) Veröffentlichungstag der Anmeldung: 15.01.2025
(73) Patentinhaber: SEW-EURODRIVE GmbH & Co. KG, 76646 Bruchsal (DE)
(72) Erfinder: SAAR, Steffen, D-67376 Harthausen (DE); STRAUSS, Dietmar, D-76646 Bruchsal (DE); KNITTEL, Jan, D-76706 Dettenheim (DE)
(86) Internationale Anmeldenummer: PCT/EP2023/053719
(87) Internationale Veröffentlichungsnummer: WO 2023/169785

(56) Entgegenhaltungen:
- CN-A- 103 867 691
- DE-A1- 102007 020 453
- DE-A1- 3 928 739
- US-A- 3 383 937

## Beschreibung

Die Erfindung betrifft ein Getriebe mit Gehäuseteil und Lager zur drehbaren Lagerung einer Welle.

Es ist allgemein bekannt, dass ein Getriebe mit Gehäuseteil und Lager zur drehbaren Lagerung einer Welle ausgestattet wird.

Aus der EP 3 798 076 A1 ist ein Getriebe bekannt.

Aus der DE 39 28 739 A1 ist ein Getriebe bekannt.

Aus der CN 1 040 749 55 A ist eine Dichtungsanordnung bekannt.

Aus der CN 1 06 555 868 A ist ein Getriebe bekannt.

**Aus der** US 3 383 937 A **ist als nächstliegender Stand der Technik ist eine Schmieranordnung für ein Getriebe mit Lager bekannt.**

**Aus der** CN 103 867 691 A **ist eine Schmieranordnung für eine Lageranordnung bekannt.**

**Aus der** DE 10 2007 020453 A1 **ist ein Getriebe mit Schmiermittel-Kreislaufsystem bekannt.**

**Aus der** DE 39 28 739 A1 **ist ein Getriebe bekannt.**

Der Erfindung liegt daher die Aufgabe zugrunde, ein Getriebe öldicht weiterzubilden, wobei Verluste verringert werden sollen.

Erfindungsgemäß wird die Aufgabe bei dem Getriebe nach den in Anspruch 1 angegebenen Merkmalen gelöst.

Von Vorteil ist dabei, dass die Öldichtigkeit trotz Verwendung einer berührungslosen Dichtung herstellbar ist. Denn wenn im Betrieb das Öl im Innenraum des Getriebes stark bewegt wird und der gesamte Innenraum mit Öl beaufschlagt wird, ist trotzdem ein Austreten von Öl zur berührungslosen Dichtung hin verhinderbar.

Hierzu wird dem Lager über den ersten Freiraum Öl zugeführt. Dieser erste Freiraum ist aber getrennt von der berührungslosen Dichtung, indem eine Barriere an den ersten Freiraum angrenzt, die vom Öl nur schwer überwunden werden kann, und dann sich an die Barriere ein zweiter Freiraum sich anschließt, der das die Barriere überwindenden Öl abführt über einen Abführkanal, der ein Ableiten dieses Öls in den beruhigten Ölsumpf über ein Rohrteil ermöglicht. Das Rohrteil mündet in den Ölsumpf nach unten gerichtet, um einen Rückstau oder Rückfluss zu verhindern. Dadurch bleibt der zweite Freiraum geschützt von rückfließendem Öl und schützt dadurch die berührungslose Dichtung.

Die Verwendung einer berührungslosen Dichtung verringert die Reibleistung, also auch die Verlustleistung des Getriebes, insbesondere im Vergleich zu einem Wellendichtring.

**Erfindungsgemäß** weist ein Lagerdeckel des Getriebes einen Zentrierbund auf, der in eine den Außenring des Lagers aufnehmende, durch das Gehäuseteil durchgehende Lageraufnahmebohrung des Gehäuseteils hineinragt und/oder eingesteckt ist,
wobei der erste Freiraum durch eine radiale Beabstandung des Zentrierbunds von der Welle gebildet ist,
insbesondere wobei der Zentrierbund ein axial am Lagerdeckel hervorragender hohlzylindrischer Bereich des Lagerdeckels ist. Von Vorteil ist dabei, dass ein schmaler Zentrierbund einen großen ersten Freiraum bewirkt, so dass das Lager mit Öl gut versorgbar ist.

**Erfindungsgemäß** weist der Ringspalt eine geringere radiale Breite auf als der erste Freiraum und als der zweite Freiraum,
insbesondere wobei der Ringspalt eine radiale Breite von weniger als 3 Millimeter, insbesondere weniger als 1 Millimeter, aufweist. Von Vorteil ist dabei, dass die Barriere durch den Ringspalt gebildet ist, der durch den nur wenig größeren lichten Innendurchmesser der Ausnehmung der Scheibe gebildet ist. somit erzeugt also die Scheibe eine Barriere und kann gleichzeitig als Labyrinthscheibe der berührungslosen Dichtung fungieren.

**Erfindungsgemäß** ist im Gehäuseteil ein Zuführkanal ausgebildet, welcher
- entweder direkt in den ersten Freiraum mündet,
- oder über einen zwischen Lagerdeckel und Gehäuseteil gebildeten dritten Hohlraum in den ersten Freiraum mündet,
   wobei dem Zuführkanal aus einem Zwischenspeicher Schmieröl zuführbar ist und dem Zwischenspeicher hochgespritztes und von einer Auffangvorrichtung aufgefangenes Öl über ein Zuführmittel dem Zwischenspeicher zugeleitet wird. Von Vorteil ist dabei, dass die Lager gut mit Schmieröl versorgbar sind.

**Erfindungsgemäß** ist das Rohrteil ein Winkelrohr und/oder das Rohrteil mündet im Ölsumpf des Getriebes. Von Vorteil ist dabei, dass das Rohrteil möglichst tief im Ölsumpf mündet und somit kein Rückfluss durch schnell bewegtes Öl bewirkt werden kann. Denn dies würde die berührungslose Dichtung gefährden.

**Erfindungsgemäß** ist die Mündungsöffnung des von der Axialbohrung abgewandten Endes des Rohrteils nach unten geöffnet,
insbesondere ist die kreisförmige Mündungsöffnung des von der Axialbohrung abgewandten Endes des Rohrteils derart ausgerichtet, dass der Normalenvektor der den Kreis der kreisförmigen Mündungsöffnung aufnehmende Ebene parallel zur Gravitationsrichtung ausgerichtet ist. Von Vorteil ist dabei, dass der Rückfluss schon dadurch vermindert wird, dass horizontal fließende Strömungen im Ölsumpf keinen wesentlichen Druck aufbauen können, der dann einen Rückfluss von Öl aus dem Ölsumpf in das Rohrteil hinein bewirken könnte.

Bei einer vorteilhaften Ausgestaltung ist das Getriebe derart in einer industriellen Anlage angeordnet, dass die Drehachse der Welle horizontal ausgerichtet ist und/oder das Lager oberhalb des bei Stillsetzung des Getriebes sich einstellenden Ölpegels des Schmieröls angeordnet ist. Von Vorteil ist dabei, dass das Getriebe beispielsweise auf dem Boden der Anlage derart aufstellbar ist oder in eine Maschine derart einbaubar ist, dass die Drehachse der Welle horizontal ausgerichtet ist.

Bei einer vorteilhaften Ausgestaltung ist der Innenring des Lagers auf die Welle aufgesteckt,
wobei der Außenring des Lagers durch einen in eine Ringnut des Gehäuseteils eingelassenen Sicherungsring axial begrenzt ist,
wobei der erste Freiraum axial einerseits an den Sicherungsring und andererseits an die Scheibe angrenzt. Von Vorteil ist dabei, dass der erste Freiraum durch den Sicherungsring axial festgelegt ist.

Bei einer vorteilhaften Ausgestaltung ist der erste Freiraum berandet von dem Sicherungsring, der Scheibe, der Welle, dem Lager und dem Gehäuseteil. Von Vorteil ist dabei, dass aus dem ersten Freiraum Öl den Wälzkörpern des Lagers zuführbar ist.

**Erfindungsgemäß** mündet der Ringspalt in axialer Richtung in den zweiten Freiraum mündet und entgegen der axialen Richtung in den ersten Freiraum. Von Vorteil ist dabei, dass der Ringspalt für das Öl ein Hindernis oder eine Barriere bildet.

Bei einer vorteilhaften Ausgestaltung bildet die Scheibe zusammen mit einer weiteren auf die Welle aufgesteckten, mit der Welle drehfest verbundenen Scheibe, insbesondere weitere Labyrinthscheibe, die berührungslose Dichtung. Von Vorteil ist dabei, dass die berührungslose Dichtung als Labyrinthdichtung ausbildbar ist.

Bei einer vorteilhaften Ausgestaltung ist der erste Freiraum ringförmig ausgebildet, wobei die Ringachse des ringförmigen ersten Freiraums koaxial zur Drehachse der Welle und/oder zur Drehachse des Lagers ausgerichtet ist. Von Vorteil ist dabei, dass die Schmierung des Lagers in Umfangsrichtung gleichmäßig ausführbar ist.

Bei einer vorteilhaften Ausgestaltung ist der zweite Freiraum ringförmig ausgebildet, wobei die Ringachse des ringförmigen zweiten Freiraums koaxial zur Drehachse der Welle und/oder zur Drehachse des Lagers ausgerichtet ist. Von Vorteil ist dabei, dass die berührungslose Dichtung in Umfangsrichtung gleichmäßig schützbar ist und von der Welle abgespritztes Öl im zweiten Freiraum auffangbar ist.

Bei einer vorteilhaften Ausgestaltung ist der Abführkanal zwischen dem Lagerdeckel und dem Gehäuseteil ausgebildet. Von Vorteil ist dabei, dass kein zusätzliches Teil notwendig ist.

Bei einer vorteilhaften Ausgestaltung ist der Abführkanal vertikal ausgerichtet. Von Vorteil ist dabei, dass das Öl schnell abfließt.

Bei einer vorteilhaften Ausgestaltung ist die Axialbohrung horizontal ausgerichtet. Von Vorteil ist dabei, dass die Herstellung einfach ausführbar ist.

Bei einer vorteilhaften Ausgestaltung ist die Axialbohrung oberhalb des sich im Ruhezustand des Getriebes einstellenden Ölpegels angeordnet. Von Vorteil ist dabei, dass die berührungslose Dichtung im Ruhezustand automatisch geschützt ist. Denn das Lager ist oberhalb der Axialbohrung angeordnet und somit weiter entfernt vom Öl als die Axialbohrung. In axialer Richtung weist das Gehäuseteil keine weitere durchgehende Ausnehmung auf, die unterhalb der Axialbohrung oder zwischen der Lageraufnahmebohrung und der Axialbohrung angeordnet ist. Somit ist die Dichtung vor Öl geschützt.

Bei einer vorteilhaften Ausgestaltung wird im Betriebszustand des Getriebes der nicht in die Axialbohrung eingesteckte Bereich des Rohrteils mit Öl beaufschlagt, insbesondere durch die von einem Zahnrad des Getriebes bewirkte Bewegung des Öls. Von Vorteil ist dabei, dass bei aufgewühltem Ölsumpf der Bereich des Rohrteils mit Öl beaufschlagt wird, aber das Rohrteil den Rückfluss von Öl verhindert.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

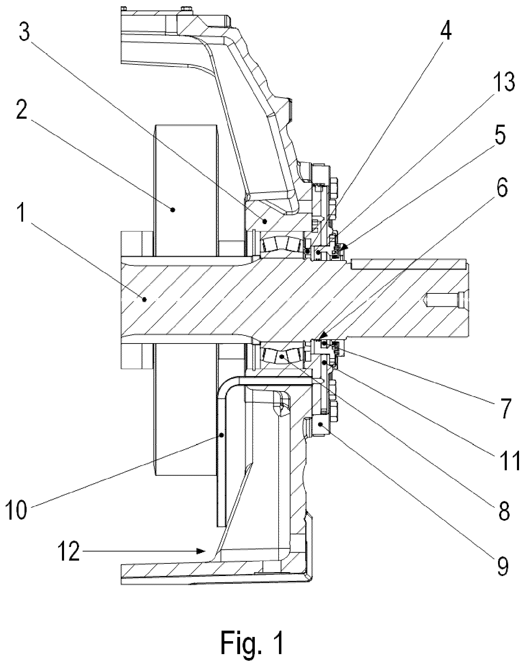

In der Figur 1 ist ein Bereich eines geschnittenen erfindungsgemäßen Getriebes schematisch skizziert.

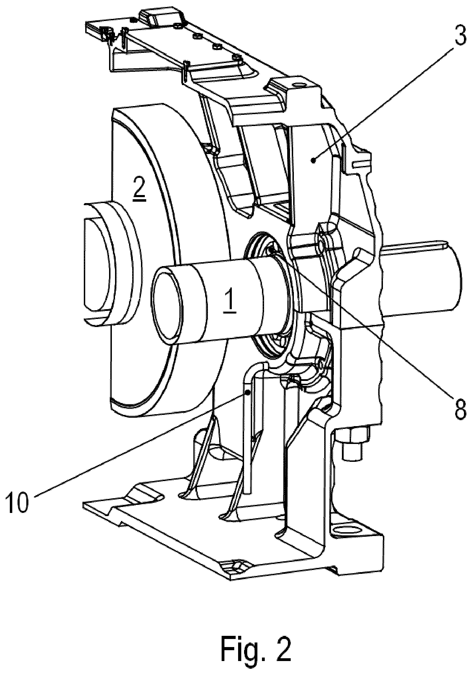

In der Figur 2 ist eine zugehörige Schrägansicht dargestellt.

Wie in den Figuren dargestellt, soll Schmieröl des Getriebes von einer berührungslosen Dichtung, die beispielhaft als Labyrinth-Dichtung 5 ausgeführt ist, ferngehalten werden.

Hierzu ist in einem Gehäuseteil 3 ein Lager 8, insbesondere Wälzlager, aufgenommen zur Lagerung einer Welle 1, die einen verzahnten Bereich aufweist, welcher mit einem Zahnrad 2 im Eingriff ist, welches mit einer Zwischenwelle des Getriebes drehfest verbunden ist, die ebenfalls drehbar gelagert ist.

Zur Schmierung des Lagers 8 wird oberhalb des Lagers 8 Schmieröl über einen Zuführkanal in einen ersten umlaufenden Freiraum 4 zugeführt, von dem aus das Lager 8 mit Schmieröl versorgbar ist.

Die Zuführung in den Zuführkanal ist entweder aktiv als Druckschmierung durch eine Ölpumpe oder passiv durch Auffangen von nach oben gespritztem Öl ermöglicht, insbesondere das in einem Zwischenspeicher gesammelt wird, woraus der Zuführkanal gespeist wird.

Das nicht übers Lager 8 abgeführte Schmieröl sammelt sich an der untersten Stelle des umlaufenden Freiraums 4.

Um ein Vordringen dieses Öls in axialer Richtung zur berührungslosen Dichtung hin, insbesondere zur Labyrinthdichtung 5 hin, zu verhindern, ist von einer Scheibe 13, insbesondere Labyrinthscheibe, welche auf die Welle 1 aufgesteckt ist, eine Ölbarriere gebildet, indem ein möglichst geringer Ringspalt zwischen der Welle 1 und der Innenkontur 6 der Scheibe 13 vorhanden ist, und die Innenkontur 13 bildet somit eine Barriere für das Öl.

Erst wenn das Öl an der untersten Stelle genügend hoch angestiegen ist, kann die Barriere vom Öl überwunden werden.

Die Scheibe 13 ist derart geformt, dass auf der vom Lager 4 abgewandten Seite der Barriere, insbesondere also auf der vom Lager 4 abgewandten Seite des Ringspalts, ein zweiter umlaufender Freiraum 7 ausgebildet ist, so dass dasjenige Öl, welches den Ringspalt in axialer Richtung überwunden hat, von der drehenden Welle 1 abgeschleudert wird in den zweiten Freiraum 7 hinein. An dessen unterster Stelle ist ein Ablaufkanal 11 ausgebildet, so dass das Öl sich im zweiten Freiraum 7 nicht ansammeln kann.

Dieser Ablaufkanal 11 mündet in eine Axialbohrung des Gehäuseteils 3, in welche ein Rohrteil 10, das als Winkelrohr ausgeführt ist, eingesteckt ist. Das Rohrteil 10 reicht insbesondere möglichst tief in den Ölsumpf.

Der Ölpegel des Ölsumpfes liegt niedriger als der tiefste Punkt des Lagers 8, wenn das Getriebe im Ruhezustand sich befindet, insbesondere also stillsteht.

Wenn jedoch das Getriebe im Betrieb ist, wird das Schmieröl turbulent bewegt, so dass das Öl das Rohrteil 10 bis zu seinem höchstgelegenen Punkt, insbesondere Oberflächenpunkt, bedeckt oder bespritzt. Somit verhindert das Rohrteil 10 einen Rückfluss von Öl in die Axialbohrung und den Ablaufkanal 11 und schützt auf diese Weise die berührungslose Dichtung vor dem Öl.

Der Lagerdeckel 9 den ölführenden Bereich ab und schützt somit vor Eindringen von Schmutz.

Insbesondere ist das Getriebe Teil einer industriellen Anlage oder Maschine, wobei das Getriebe derart in der Anlage angeordnet ist, dass das Lager 8 in Gravitationsrichtung oberhalb des Ölsumpfes angeordnet ist, insbesondere im Ruhezustand des Getriebes.

Der erste Freiraum 4 ist dadurch gebildet, dass der Lagerdeckel 9 mit einem Zentrierbund in die Lageraufnahme, insbesondere in die Lageraufnahmebohrung, eingesteckt wird, wobei der Zentrierbund des Lagerdeckels 9 radial beabstandet ist von der Welle 1 und somit der erste Freiraum 4 gebildet ist.

Bei weiteren erfindungsgemäßen Ausführungsbeispielen ist die Welle 1 anstatt des verzahnten Bereichs mit einem weiteren Zahnrad drehfest verbunden.

### Bezugszeichenliste

1 Welle
2 Zahnrad
3 Gehäuseteil
4 erster Freiraum, insbesondere umlaufender Freiraum
5 Labyrinthdichtung mit weiterer Scheibe, insbesondere Labyrinthscheibe
6 Innenkontur der Scheibe 13, insbesondere zur Bildung einer Barriere
7 zweiter Freiraum, insbesondere umlaufender Freiraum
8 Lager
9 Lagerdeckel
10 Rohrteil, insbesondere Winkelrohr
11 Ablaufkanal
12 Ölsumpf
13 Scheibe, insbesondere Labyrinthscheibe

## Patentansprüche

1. Getriebe mit Gehäuseteil (3), Welle (1) und Lager (8) zur drehbaren Lagerung der Welle (1),
wobei das Lager (8) im Gehäuseteil (3) aufgenommen ist,
wobei den Wälzkörpern des Lagers aus einem ersten Freiraum (4) Schmieröl zuführbar ist,
wobei eine berührungslose Dichtung zur Abdichtung des mit Schmieröl beaufschlagten Lagers zur Umgebung hin auf der vom Lager (8) in axialer Richtung abgewandten Seite des ersten Freiraums (4) angeordnet ist,
wobei eine Scheibe (13) mit dem Gehäuseteil (3) verbunden ist,
wobei die Welle (1) durch eine Ausnehmung der Scheibe (13) hindurchragt,
wobei ein Ringspalt zwischen der Welle (1) und der Scheibe (13) ausgebildet ist,
wobei auf der von dem ersten Freiraum (4) in axialer Richtung abgewandten Seite der Scheibe (13) ein zweiter Freiraum (7) angeordnet ist,
wobei in Gravitationsrichtung tiefsten Stelle des zweiten Freiraums (7) ein Abführkanal in den zweiten Freiraum (7) mündet zum Abführen von Schmieröl aus dem zweiten Freiraum (7) in den Abführkanal,
wobei eine Axialbohrung des Gehäuseteils (3) in den Abführkanal mündet und an ihrem vom Abführkanal abgewandten Endbereich mit einem Rohrteil (10) verbunden ist,
**dadurch gekennzeichnet, dass** mündet, das Rohrteil (10) ein Winkelrohr ist und/oder das Rohrteil (10) im Ölsumpf (12) des Getriebes die Mündungsöffnung des von der Axialbohrung abgewandten Endes des Rohrteils (10) nach unten, also in Gravitationsrichtung nach unten, geöffnet ist,
**wobei ein Lagerdeckel (9) des Getriebes einen Zentrierbund aufweist, der in eine den Außenring des Lagers aufnehmende, durch das Gehäuseteil (3) durchgehende Lageraufnahmebohrung des Gehäuseteils (3) hineinragt und/oder eingesteckt ist,**
**wobei der erste Freiraum (4) durch eine radiale Beabstandung des Zentrierbunds von der Welle (1) gebildet ist,**
**wobei der Ringspalt eine geringere radiale Breite aufweist als der erste Freiraum (4) und als der zweite Freiraum (7),**
**wobei im Gehäuseteil (3) ein Zuführkanal ausgebildet ist, welcher**
- **entweder direkt in den ersten Freiraum (4) mündet,**
- **oder über einen zwischen Lagerdeckel (9) und Gehäuseteil (3) gebildeten dritten Hohlraum in den ersten Freiraum (4) mündet,**
**wobei dem Zuführkanal aus einem Zwischenspeicher Schmieröl zuführbar ist und dem Zwischenspeicher hochgespritztes und von einer Auffangvorrichtung aufgefangenes Öl über ein Zuführmittel dem Zwischenspeicher zugeleitet wird,**
**wobei der Ringspalt in axialer Richtung in den zweiten Freiraum (7) mündet und entgegen der axialen Richtung in den ersten Freiraum (4) mündet.**

2. Getriebe nach Anspruch 1
**dadurch gekennzeichnet, dass**
der Zentrierbund ein axial am Lagerdeckel (9) hervorragender hohlzylindrischer Bereich des Lagerdeckels (9) ist.

3. Getriebe nach einem der vorangegangenen Ansprüche,
**dadurch gekennzeichnet, dass**
der Ringspalt eine radiale Breite von weniger als 3 Millimeter aufweist.

4. Getriebe nach einem der vorangegangenen Ansprüche,
**dadurch gekennzeichnet, dass**
eine kreisförmige Mündungsöffnung des von der Axialbohrung abgewandten Endes des Rohrteils (10) derart ausgerichtet ist, dass der Normalenvektor der den Kreis der kreisförmigen Mündungsöffnung aufnehmende Ebene parallel zur Gravitationsrichtung ausgerichtet ist.

5. Getriebe nach einem der vorangegangenen Ansprüche,
**dadurch gekennzeichnet, dass**
das Getriebe derart in einer industriellen Anlage angeordnet ist, dass die Drehachse der Welle (1) horizontal ausgerichtet ist und/oder das Lager (8) oberhalb des bei Stillsetzung des Getriebes sich einstellenden Ölpegels des Schmieröls angeordnet ist.

6. Getriebe nach einem der vorangegangenen Ansprüche,
**dadurch gekennzeichnet, dass**
der Innenring des Lagers auf die Welle (1) aufgesteckt ist,
wobei der Außenring des Lagers durch einen in eine Ringnut des Gehäuseteils (3) eingelassenen Sicherungsring axial begrenzt ist,
wobei der erste Freiraum (4) axial einerseits an den Sicherungsring und andererseits an die Scheibe (13) angrenzt.

7. Getriebe nach einem der vorangegangenen Ansprüche,
**dadurch gekennzeichnet, dass**
der erste Freiraum (4) berandet ist von dem Sicherungsring, der Scheibe (13), der Welle (1), dem Lager (8) und dem Gehäuseteil (3),

8. Getriebe nach einem der vorangegangenen Ansprüche,
**dadurch gekennzeichnet, dass**
die Scheibe (13) zusammen mit einer weiteren auf die Welle (1) aufgesteckten, mit der Welle (1) drehfest verbundenen Scheibe (13) der Labyrinthdichtung (5), die berührungslose Dichtung bildet.

9. Getriebe nach einem der vorangegangenen Ansprüche,
**dadurch gekennzeichnet, dass**
der erste Freiraum (4) ringförmig ausgebildet ist, wobei die Ringachse des ringförmigen ersten Freiraums (4) koaxial zur Drehachse der Welle (1) und/oder zur Drehachse des Lagers ausgerichtet ist.

10. **Getriebe nach einem der vorangegangenen Ansprüche,**
**dadurch gekennzeichnet, dass**
**der zweite Freiraum (7) ringförmig ausgebildet ist, wobei die Ringachse des ringförmigen zweiten Freiraums (7) koaxial zur Drehachse der Welle (1) und/oder zur Drehachse des Lagers ausgerichtet ist.**

11. Getriebe nach einem der vorangegangenen Ansprüche,
**dadurch gekennzeichnet, dass**
der Abführkanal zwischen dem Lagerdeckel (9) und dem Gehäuseteil (3) ausgebildet ist.

12. **Getriebe nach einem der vorangegangenen Ansprüche,**
**dadurch gekennzeichnet, dass**
**der Abführkanal vertikal ausgerichtet ist.**

13. **Getriebe nach einem der vorangegangenen Ansprüche,**
**dadurch gekennzeichnet, dass**
**die Axialbohrung horizontal ausgerichtet ist.**

14. **Getriebe nach einem der vorangegangenen Ansprüche,**
**dadurch gekennzeichnet, dass**
**die Axialbohrung oberhalb des sich im Ruhezustand des Getriebes einstellenden Ölpegels angeordnet ist.**

15. **Getriebe nach einem der vorangegangenen Ansprüche,**
**dadurch gekennzeichnet, dass**
**im Betriebszustand des Getriebes der nicht in die Axialbohrung eingesteckte Bereich des Rohrteils (10) mit Öl beaufschlagt wird, insbesondere durch die von einem Zahnrad (2) des Getriebes bewirkte Bewegung des Öls.**

## Claims

1. A gear unit with housing part (3), shaft (1) and bearing (8) for rotatably mounting the shaft (1),
wherein the bearing (8) is received in the housing part (3),
wherein lubricating oil can be supplied to the rolling elements of the bearing from a first free space (4),
wherein a non-contact seal for sealing off the bearing acted upon by lubricating oil towards the surroundings is arranged on that side of the first free space (4) remote from the bearing (8) in the axial direction,
wherein a disc (13) is connected to the housing part (3),
wherein the shaft (1) protrudes through a cutout in the disc (13),
wherein an annular gap is formed between the shaft (1) and the disc (13),
wherein a second free space (7) is arranged on that side of the disc (13) which is remote from the first free space (4) in the axial direction,
wherein [at the] deepest point in the direction of gravity of the second free space (7) a discharge duct opens into the second free space (7) for discharging lubricating oil from the second free space (7) into the discharge duct,
wherein an axial bore in the housing part (3) opens into the discharge duct and is connected at its end region remote from the discharge duct to a tube part (10),
**characterised in that**
the tube part (10) is an angled tube and/or the tube part (10) opens into the oil sump (12) of the gear unit,
the mouth opening of that end of the tube part (10) which is remote from the axial bore is opened downwards, i.e. in the direction of gravity downwards,
with a bearing cover (9) of the gear unit having a centring collar which protrudes and/or is inserted into a bearing receptacle bore, which receives the outer ring of the bearing and passes through the housing part (3), of the housing part (3),
with the first free space (4) being formed by a radial spacing of the centring collar from the shaft (1),
with the annular gap being of a lesser radial width than the first free space (4) and than the second free space (7),
with a feed duct being formed in the housing part (3) which
- opens either directly into the first free space (4),
- or opens into the first free space (4) by way of a third cavity formed between the bearing cover (9) and housing part (3),
with lubricating oil being able to be supplied to the feed duct from an intermediate storage means, and to the intermediate storage means oil which is splashed up and collected by a collecting device being fed by way of a supply means to the intermediate storage means,
with the annular gap opening in the axial direction into the second free space (7) and opening counter to the axial direction into the first free space (4).

2. A gear unit according to claim 1,
**characterised in that**
the centring collar is a hollow-cylindrical region of the bearing cover (9) which protrudes axially from the bearing cover (9).

3. A gear unit according to one of the preceding claims,
**characterised in that**
the annular gap has a radial width of less than 3 millimetres.

4. A gear unit according to one of the preceding claims,
**characterised in that**
a circular mouth opening of that end of the tube part (10) which is remote from the axial bore is oriented in such a way that the normal vector of the plane receiving the circle of the circular mouth opening is oriented parallel to the direction of gravity.

5. A gear unit according to one of the preceding claims,
**characterised in that**
the gear unit is arranged in an industrial installation in such a way that the axis of rotation of the shaft (1) is oriented horizontally and/or the bearing (8) is arranged above the oil level of the lubricating oil which is established when the gear unit is stopped.

6. A gear unit according to one of the preceding claims,
**characterised in that**
the inner ring of the bearing is mounted on the shaft (1),
with the outer ring of the bearing being axially limited by a securing ring embedded into an annular groove in the housing part (3),
with the first free space (4) axially adjoining on one hand the securing ring and on the other hand the disc (13).

7. A gear unit according to one of the preceding claims,
**characterised in that**
the first free space (4) is bordered by the securing ring, the disc (13), the shaft (1), the bearing (8) and the housing part (3).

8. A gear unit according to one of the preceding claims,
**characterised in that**
the disc (13), together with a further disc (13), mounted on the shaft (1) and connected non-rotatably to the shaft (1), of the labyrinth seal (5), forms the non-contact seal.

9. A gear unit according to one of the preceding claims,
**characterised in that**
the first free space (4) is annular in shape, with the ring axis of the annular first free space (4) being oriented coaxially with the axis of rotation of the shaft (1) and/or with the axis of rotation of the bearing.

10. A gear unit according to one of the preceding claims,
**characterised in that**
the second free space (7) is annular in shape, with the ring axis of the annular second free space (7) being oriented coaxially with the axis of rotation of the shaft (1) and/or with the axis of rotation of the bearing.

11. A gear unit according to one of the preceding claims,
**characterised in that**
the discharge duct is formed between the bearing cover (9) and the housing part (3).

12. A gear unit according to one of the preceding claims,
**characterised in that**
the discharge duct is oriented vertically.

13. A gear unit according to one of the preceding claims,
**characterised in that**
the axial bore is oriented horizontally.

14. A gear unit according to one of the preceding claims,
**characterised in that**
the axial bore is arranged above the oil level which is established in the non-operative state of the gear unit.

15. A gear unit according to one of the preceding claims,
**characterised in that**
in the operating state of the gear unit that region of the tube part (10) which is not inserted into the axial bore is acted upon by oil, in particular due to the movement of the oil which is brought about by a gear wheel (2) of the gear unit.

## Revendications

1. Transmission avec partie carter (3), arbre (1) et palier (8) permettant une mise sur palier rotative de l'arbre (1),
le palier (8) étant logé dans la partie carter (3)
les corps de roulement du palier pouvant être alimentés en huile de lubrification à partir d'un premier espace libre (4), un joint sans contact étant agencé sur le côté du premier espace libre (4) qui est opposé au palier (8) dans la direction axiale afin d'assurer l'étanchéité du palier alimenté en huile de lubrification par rapport à l'environnement, une rondelle (13) étant reliée à la partie carter (3),
l'arbre (1) traversant un évidement de la rondelle (13),
un espace annulaire étant formé entre l'arbre (1) et la rondelle (13), un second espace (7) étant agencé sur le côté de la rondelle (13) qui est opposé au premier espace libre (4) dans la direction axiale,
un canal d'évacuation débouchant dans le second espace libre (7) au point le plus bas du second espace libre (7) dans le sens de la gravité, afin d'évacuer l'huile de lubrification hors du second espace libre (7) dans le canal d'évacuation,
un alésage axial de la partie carter (3) débouchant dans le canal d'évacuation et étant relié à une partie tuyau (10) au niveau de sa région d'extrémité opposée au canal d'évacuation,
**caractérisée en ce que**
la partie tuyau (10) est un tuyau d'angle et/ou la partie tuyau (10) débouche dans le carter d'huile (12) de la transmission, l'orifice de bouche de l'extrémité de la partie tuyau (10) opposée à l'alésage axial est ouverte vers le bas, c'est-à-dire vers le bas dans le sens de la gravité,
un couvercle de palier (9) de la transmission présentant un collet de centrage qui fait saillie et/ou est inséré dans un alésage de logement de palier, accueillant la bague extérieure du palier et traversant la partie carter (3), de la partie carter (3),
le premier espace libre (4) étant formé grâce à un espacement radial du collet de centrage par rapport à l'arbre (1),
l'espace annulaire présentant une largeur radiale inférieure à celle du premier espace libre (4) et à celle du second espace libre (7),
un canal d'alimentation est formé dans la partie carter (3), lequel
- soit débouche directement dans le premier espace libre (4),
- soit débouche dans le premier espace libre (4) en passant par une troisième cavité formée entre le couvercle de palier (9) et la partie carter (3),
de l'huile de lubrification pouvant être alimentée vers le canal d'alimentation à partir d'un réservoir intermédiaire et de l'huile projetée et recueillie par un dispositif de collecte étant acheminée vers le réservoir intermédiaire par l'intermédiaire d'un moyen d'alimentation,
l'espace annulaire débouchant dans le second espace libre (7) dans la direction axiale et débouchant dans le premier espace libre (4) à l'encontre de la direction axiale.

2. Transmission selon la revendication 1, 3 ou 2,
**caractérisée en ce que**
le collet de centrage est une région cylindrique creuse du couvercle de palier (9) qui fait saillie axialement au niveau du couvercle de palier (9).

3. Transmission selon l'une quelconque des revendications précédentes,
**caractérisée en ce que**
l'espace annulaire présente une largeur radiale inférieure à 3 millimètres, en particulier inférieure à 3 millimètres.

4. Transmission selon l'une quelconque des revendications précédentes,
**caractérisée en ce que**
un orifice de bouche circulaire de l'extrémité de la partie tuyau (10) qui est opposée à l'alésage axial est orienté de telle manière que le vecteur normal du plan dans lequel s'inscrit le cercle de l'orifice de bouche circulaire est orienté parallèlement au sens de la gravité.

5. Transmission selon l'une quelconque des revendications précédentes,
**caractérisée en ce que**
la transmission est agencée dans une installation industrielle de telle manière que l'axe de rotation de l'arbre (1) est orienté horizontalement et/ou le palier (8) est agencé au-dessus du niveau d'huile de l'huile de lubrification qui s'établit lors de l'arrêt de la transmission.

6. Transmission selon l'une quelconque des revendications précédentes,
**caractérisée en ce que**
la bague intérieure du palier est enfichée sur l'arbre (1),
la bague extérieure du palier étant limitée axialement par une bague de blocage encastrée dans une rainure annulaire de la partie carter (3),
le premier espace libre (4) étant adjacent axialement d'une part à la bague de blocage et d'autre part à la rondelle (13).

7. Transmission selon l'une quelconque des revendications précédentes,
**caractérisée en ce que**
le premier espace libre (4) est bordé par la bague de blocage, la rondelle (13), l'arbre (1), le palier (8) et la partie carter (3).

8. Transmission selon l'une quelconque des revendications précédentes,
**caractérisée en ce que**
la rondelle (13), en commun avec une autre rondelle (13) du joint labyrinthe (5) qui est enfichée sur l'arbre (1) et est reliée de manière solidaire en rotation à l'arbre (1), forme un joint sans contact.

9. Transmission selon l'une quelconque des revendications précédentes,
**caractérisée en ce que**
le premier espace libre (4) est de forme annulaire, l'axe annulaire du premier espace libre annulaire (4) étant orienté de manière coaxiale par rapport à l'axe de rotation de l'arbre (1) et/ou par rapport à l'axe de rotation du palier.

10. Transmission selon l'une quelconque des revendications précédentes,
**caractérisée en ce que**
le second espace libre (7) est de forme annulaire, l'axe annulaire du second espace libre annulaire (7) étant orienté de manière coaxiale par rapport à l'axe de rotation de l'arbre (1) et/ou par rapport à l'axe de rotation du palier.

11. Transmission selon l'une quelconque des revendications précédentes,
**caractérisée en ce que**
le canal d'évacuation est formé entre le couvercle de palier (9) et la partie carter (3).

12. Transmission selon l'une quelconque des revendications précédentes,
**caractérisée en ce que**
le canal d'évacuation est orienté verticalement.

13. Transmission selon l'une quelconque des revendications précédentes,
**caractérisée en ce que**
l'alésage axial est orienté horizontalement.

14. Transmission selon l'une quelconque des revendications précédentes,
**caractérisée en ce que**
l'alésage axial est agencé au-dessus du niveau d'huile qui s'établit au repos de la transmission.

15. Transmission selon l'une quelconque des revendications précédentes,
**caractérisée en ce que**
dans l'état de fonctionnement de la transmission, la région de la partie tuyau (10) non insérée dans l'alésage axial est alimentée en huile, en particulier grâce au mouvement de l'huile provoqué par une roue dentée (2) de la transmission.
